# EUROPEAN PATENT SPECIFICATION

(11) **EP 2 641 837 B1**
(45) Date of publication and mention of the grant of the patent: **14.05.2014**
(21) Application number: 12001962.5
(22) Date of filing: 20.03.2012
(51) Int. Cl.: B65D 1/02, B29C 49/22, B32B 7/02, B32B 27/08, B32B 27/20, B32B 27/36

(54) **Opaque multi-layer container**
Opaker, mehrschichtiger Behälter
Récipient multicouche opaque

(43) Date of publication of application: 25.09.2013
(73) Proprietor: Sociedad Anónima Minera Catalano-Aragonesa, 50001 Zaragoza (ES)
(72) Inventor: Leza Roa, Fortun, 50001 Zaragoza (ES); Caballero Lopez, Miguel Angel, 50001 Zaragoza (ES)
(74) Representative: Schäfer, Matthias W.

(56) References cited:
- EP-A1- 1 541 623
- EP-A1- 1 970 181
- WO-A2-03/064267
- WO-A2-2007/128085
- JP-A- 2 103 135
- JP-A- 4 272 825

## Description

This description relates, as its title indicates, to an opaque multi-layer container with light shielding, of the type produced by blowing a preform or by injection-blowing and preferably intended to contain photosensitive substances, which comprises at least two layers of thermoplastic material with opacifying materials dispersed in *any of* the layers of thermoplastic material, the thermoplastic material being polyethylene terephthalate (PET) in all of the layers and including the opacifying material in at least one of the layers, aluminium metal (Al) and a light absorbent dispersed in the thermoplastic matrix.

### Field of the invention

There are many substances that are sensitive to deterioration by the action of light with the ensuing alteration in organoleptic and nutritional properties. Amongst these substances vitamins, amino acids, peroxides or fats can be mentioned, each one of them being especially sensitive to one or several wavelengths, specific to each substance and different one from another, so that we can find photosensitive substances at practically any wavelength of both the ultraviolet spectra (UVA) (up to 400 nm), and the visible spectra (VIS) (400 to 700 nm), in which there are specific sensitivities. For example:
Vitamin B2 (riboflavin): specific sensitivity reaches wavelengths of up to 550 nm. This region of the visible spectrum (VIS) is particularly critical due to the extreme sensitivity of vitamin B2 around 550 nm, its degradation, in the case of milk, causing severe alterations to nutritional capacity, odour and taste (the organoleptic alteration caused in milk by the effect of degradation of riboflavin is known as "lightstruck flavour").
Vitamin A (retinol): 410 - 460 nm.
Vitamin C (ascorbic acid): the most aggressive wavelengths are below 300 nm.
Amino acids: particularly sensitive in the UVA region (around 250 nm), less sensitive to VIS radiation.
Chromophore compounds of different types: sensitivities can be found in both the UVA and VIS region.

The incorporation of light shields in containers intended for containing substances that are sensitive to deterioration induced by the action of UVA or VIS light is common practice in the industries of packaging and distribution of dairy products, fruit juices, pharmacy, drugs and, in general, food or preparations that contain substances that are susceptible to photolytic degradation.

There are different ways of adding a light shield to plastic containers, each with its own particular characteristics, benefits and drawbacks; the following are the most widely used:
Containers with incorporated shield: in these the plastic matrix is filled with materials that inhibit the passage of light, amongst which can be cited titanium dioxide Ti0₂, silicon dioxide SiO₂ or zinc sulphide ZnS, amongst others, with or without other secondary fillers that help to complete the shield.
   The filler content in this type of opaque containers with light protection is usually between 5% and 25% by weight of fillers in relation to total weight of container.
Multilayer*:* allows the total mineral filler content to be reduced due to the combination of different additives in each layer, so that, usually, the inner layer is black and provides the greatest shielding capacity and the outer layer (in the case of two layers) or the outer layers (in the case of three layers), are filled with other materials that conceal the black colour that has a non-conventional aspect and is impossible to personalize by overlaying it with colours or labels.

Total filler contents in this type of containers are usually around 5% by weight.

Compared to single-layer technologies, multi-layer technologies have the drawbacks of the processes being more complex and expensive, as well as the specific nature of the machinery and injection tools or those relating to more costly investments. However, they have certain advantages over conventional single-layer technologies such as the possibility of achieving practically total shields at any wavelength and that of requiring less quantity of shielding fillers.

Normally, in multi-layer options, the inner layer (in the case of two layers) or the intermediate layer (in the case of three layers) is that which provides the shielding function, the outer layer having the aesthetic function and that of personalizing the container.

The technologies for manufacturing the most usual multi-layer PET containers are now described.

All of the processes begin with the injection of a container precursor piece or preform which is then stretched and oriented inside a mould with the dimensions and shape of the final container, by introducing pressurized air inside it, whilst the preform remains hot, at a temperature that allows it to be moulded in a solid state using mechanical stress (in PET this temperature is above 70 or 80°C, with preforms usually reaching a temperature of about 100°C when they are blown).

Injection of two-layer preforms: in this technology preforms with two layers of materials are achieved, firstly injecting the inner layer and then, once this layer has cooled and solidified, the rest of the material is injected on to it, constituting the outer layer of the preform and hence the final container.

Normally the composition of the inner layer differs from that of the outer layer, so that the inner layer comprises materials with a high capacity of absorption and the outer layer performs the functions of completing the shield that may not have been provided by the inner layer and providing the finished container with the desired appearance and aesthetic quality.

One of the basic difficulties that arises during the blowing of this type of two-layer preforms is that of achieving sufficient adhesion between the layers to avoid delamination or uneven stretching between layers due to lack of compatibility between the materials that make up both layers. To avoid this undesirable circumstance, which may prevent the correct formation of the container, it is necessary to ensure the maximum possible compatibility of the materials of both layers which can be achieved by providing very similar compositions in both layers, adding to the inner layer a high concentration of light absorbent over a previous composition that is the same as that of the outer layer; this has proven to be an effective method, but it has the drawback of increasing the amount of fillers needed in the inner layer. Another method which is clearly more efficient and is the subject matter of the main advantage presented in this invention, consist of reducing, to an absolute minimum, the fillers required in both layers to complete the shield and to give the container the desired appearance, so that both layers are as similar as possible to the thermoplastic material used as a support, avoiding in this manner, problems of incompatibility.

The weight of the inner layer usually accounts for between 25% and 30% by weight, in relation to the total weight of the container

The total content of fillers conventionally used in this type of container is between 5% and 6% by weight.

Injection of three-layer preforms: in this case all of the layers of materials are injected simultaneously, so that the outer and inner layers have the same composition and the intermediate layer has a different composition and is that which is intended to provide the greatest part of the shielding power.

The weight of the inner layer in this case does not usually account for more than 10% of the total weight of the container. Consequently, the intermediate layer of the container, which provides functionality, should be endowed with a very high specific shielding capacity that is difficult to achieve without providing it with a very intense black colour, that the external layer must conceal by using high concentrations of aesthetically conventional fillers.

The total content of fillers in this type of containers, is usually about 5% by weight in relation to the total weight of the container, as in the previous case.

Very robust shields are obtained with this technology but the processes are complex, there are high waste levels and the investments required are greater than in other technologies.

Injection of single-layer preforms: they are feasible through the use of much cheaper, more affordable and flexible equipment and processes than the previous ones, but achieving sufficient levels of shielding to protect sensitive products is only possible, conventionally, at the cost of a significant increase in the amounts of fillers incorporated, said amounts being normally between 7% and 25% filler by weight in relation to the container weight.

Another particular feature of shields obtained conventionally in this type of single-layer containers is that the higher the wavelength, the poorer the shielding level afforded is. Nevertheless there are perfectly viable solutions for highly sensitive products such as UHT milk and UHT milk products.

It is obvious that the most effective solution for total shielding with the possibility of personalizing containers, is that provided by the multi-layer type, despite drawbacks in terms of processes and investments compared to single-layer solutions, this being hence the type of container adopted in the invention.

### Background to the invention

At the current time the existence of numerous and varied types of containers produced by mould-blowing based on a preform are widely known. Most of these preforms are made in polyethylene terephthalate (PET) due to this material's characteristics of transparency, light weight, low cost, excellent mechanical and gas barrier properties and the fact that it is easy to subsequently recycle into RPET. An example of this type of single-layer preforms is described in patent application PCT US2004/005890 *"Container preform assembly and method of manufacture",* which proposes a typical single-layer preform, with a neck that is injected separately.

However, for a wide variety of products, especially UHT-treated milk and other long-life dairy products, transparency is not appropriate because certain vitamins, essentially E group vitamins, as well as certain proteins and fats, are degraded by the effect of light, as seen previously, altering the original organoleptic and nutritional characteristics a few days after bottling.

There are other known alternatives to increase the light shield of PET, such as that described in US Patent 7150902 *"High T.sub.g coatings*" or in European Patent 069953 *"Hollow containers with an inert or waterproof surface layer*"*,* which intend to apply to a conventional preform or similar plastic object, a covering of different material that may include an additive or pigment, but the result of this type of procedures is not ideal either mechanically or in terms of light shielding and does not provide a solution to the problem. Likewise, there are known compounds such as that described in European Patent 1541623 *"Photoprotective composition for food containers*" which claims a compound of aluminium powder and pearled pigment that makes plastic opaque and which is added to the plastic material itself to increase life by up to three weeks, but which involves a high cost.

Another single-layer container is described in EP Patent 1541623 *"Photoprotective composition for food containers"*, which uses a mixture of white pigment, aluminium powder, black pigment and pearlescing pigments to make the plastic opaque, but it presents the drawback , in comparison to the present invention, of requiring a complex formula and of including other fillers different to Al in a much higher proportion than that of this one, which implies, for high shields, a presumably higher concentration of filler and a higher economic cost than the proposed solution.

Patent application WO 03064267 "*Opaque polyester containers*" is a single-layer embodiment, which contemplates the use of aluminium within the opacifying agents, but without establishing any ratio between the percentage of opacifying agent and the rest of the products so that it is impossible to optimize the amount of opacifying agent introduced in the mixture. Furthermore, it cites the light shield as being necessarily linked to the reduction of gas permeability, so that the proposed objective and hence the final composition of the container materials do not correspond to the invention that is presented here.

To solve these opacity problems it is a widely known practice to manufacture the container from complex multi-layer preforms by co-injection or over-moulding, in which two or three layers are formed, as the most probable solutions, so that in the three-layer composition, for example, the intermediate one differs in composition from the outer and inner ones, both of which have an identical composition. Normally, in the three-layer solution oriented towards a light shield, the base material is PET, added to which, in a different manner in the three layers, is: a white pigment, usually TiO₂ in the outer and inner layers and a black pigment, in the intermediate layer.

In the case of the two-layer solution, normally the inner layer, which is strongly dyed black, guarantees the light shield, whilst the outer layer conceals the dark colour, providing a white appearance on the visible surface of the containers. Examples of these preforms with at least three layers can be found in European Patent 0 722 887 *"Plastic material container*"*,* in the patent application PCT 00/09575 *"Apparatus and method for making barrier-coated polyester*", and in Patent US 6352426 *"Mold for injection molding multilayer preforms*"*.* These documents describe different embodiments of multi-layer preforms with different compositions in each layer, via the addition, to one of the PET layers, of a coating of different barrier materials. In some cases, such as European Patent 1681239 *"Preform, method for producing* a *preform and a container*" it refers specifically to a multi-layer preform of two or three layers with a specific light barrier of a different composition to the other layers.

The basic problems associated with the three-layer solution (conventional co-injection) are: the reduction in the production performance of the preform forming systems compared to similar single-layer preforms; the intensive maintenance that the moulds must undergo, in particular the hot runners carrying the melted material; the difficulties of guaranteeing a uniform quality of preforms, due to the sensitivity to process conditions of the depth and relative location of the intermediate shielding layer, and the difficulties in compatibilizing the intermediate layer materials with those of the enveloping layers, which frequently results in imbalances in the subsequent processes of blow-forming the containers and in delamination due to lack of adherence deriving from the different compositions of the layers. These types of known multi-layer embodiments (with outer layer, intermediate layer and inner layer) present a serious problem in that as they have different compositions with notably different filler contents, the layers behave differently when stretched during the blowing phase (i.e. in the final forming of the container or bottle). One layer stretches more than the other, so that we do not obtain a uniformly stretched container and the layers do not bond totally. This problem is known as "delamination" and it causes a high number of faulty end products, with the consequent high economic cost. Furthermore, air pockets can form between layers which can be the cause of subsequent contamination. Another added problem is cracking, which occurs during the final cooling of the container. As the layers have different dilatation coefficients, cooling does not take place at the same speed so that one layer may cause another to facture in a reticular manner, affecting the mechanical characteristics of the container.

Attempts have been made to minimize these problems by reducing the number of layers to two. Some of the two-layer solutions that we can find, for example, in European Patent 1547768 *"Method of improving the environmental stretch crack resistance of RPET without solid stating*" or in Patent JP2002337217 *"PET two-layered stretch blow-molded container*" describe an inner layer of PET reinforcing an outer layer of RPET recycled material as a structural reinforcement and to isolate the adverse properties of RPET with regards to foods, so that they are not specifically oriented towards light shielding but rather towards structural reinforcement.

Patent EP 1970181 *"Preform for Blow moulding a container"* describes a container according to the preamble of claim 1, with a composition that overcomes the problems of compatibility between the layers, approximating the filler contents in them, but using TiO₂ instead of Al as the main substance, which means that the filler content required is relatively high, more than 5% by weight of the total weight of the container.

Other available solutions already include layers that provide barriers to different elements. For example, the application of Patent PCT US2006/014300, "A *coated article*" claims an article with two layers, one that performs the function of a gas barrier and the other resistant to water, both made in different materials. Patent US 6391408 "*Coated polyester preforms and method of making same"* uses one layer of PET and another of a different material as a barrier material. US Patent 6312641 *"Method of making containers and preforms incorporating barrier materials"* claims a procedure for manufacturing a preform which may optionally include a layer of a barrier material that is different to the principal material. All these two-layer solutions use compositions of different materials in both layers, so that, in spite of achieving light shielding with the use of suitable additives, they still present the same problems of delamination and cracking which have been commented in the case of three-layer preforms, hence the solution obtained is far from being industrially viable.

In WO 99/61245 A1 a packaging material is presented that preferably comprises three layers of plastic material of the polyolefin type produced by a combined operation of extrusion and blow-moulding. These layers are permanently joined together. With regards to the intermediate layer of polyolefin, the presence of particles of lamp black and titanium dioxide TiO₂ is revealed.

In JP 04 1140576 A reference is made to a composition for a single-layer, blow-moulded bottle. It discloses a composition that includes PET, TiO₂, lamp black and iron oxide.

European Patent EP 7005185 *"Preform for blow-moulding a container*" is a multi-layer embodiment that combines titanium dioxide with a light protection pigment in two layers, with different percentages, not contemplating the use of Al.

The application for European patent 12000408 "*Opaque single-layer container*" does propose the use of Al as an opacifying material, but in single-layer containers only.

Applications are also known in which the shield in the protective layer is achieved by only using a highly shielding carbon black compound so that in this layer the amount of shielding material can be very low (less than 1 %), but this has the drawback of having to use relatively high doses of fillers in the outer layers (around 5%) to conceal the anti-aesthetic effect of the black colour.

### Description of the invention

To facilitate a solution to the problems related to the manufacture of opaque containers with a high light protection capacity, especially within those of the multi-layer type, improving the current state of the art and simplifying their production, the opaque multi-layer container that is the object of this invention has been devised, which comprises at least two layers of thermoplastic material with opacifying materials dispersed in the layers of thermoplastic material. The thermoplastic material is polyethylene terephthalate (PET) in all of the layers and the opacifying material, in at least one of the layers, includes aluminium metal (AI) and a light absorbent, dispersed in the thermoplastic matrix.

The proportion of Al and light absorbing material is such that, the proportion of Al being less than 2% and more than 0.5%, and the sum of the %Al + % light absorbent being in any case less than 2.075%, it will always be possible to find a combination of Al + Absorbent that guarantees sufficiently high shielding in the multi-layer containers described with Al.

To adequately explain the contributions that the described invention makes to the state of the art, it is necessary to focus on the detailed description of the morphology of the multi-layer containers and the compositional consequences that derive from their use for light-shielding purposes, as is the case.

Two-layer containers: it has already been mentioned that the weight of the inner layer (which is normally the layer responsible for preventing transmission of the most refractory radiations to the inside of the container) is between 25% and 30% by weight in relation to the total weight of the container, which approximately matches the ratio of thicknesses of the constituent layers once the container is formed; considering the nuance introduced by the fact that the mouth of the preform or container is formed by material corresponding to the outer layer, the thickness of the inner layer of the container can be cited as being around 35% or 40% of the total weight of the two-layer wall of the container; for a typical total container wall thickness of, for example, 0.25 mm, the thickness of the inner layer (normally the protective layer) will be around 0.08 mm to 0.1 mm.

Three-layer containers: as it has also already been mentioned, the weight of the intermediate layer (normally that which provides the main protection) is around 10% of the total weight of the container; considering that the mouth corresponds to the composition and structure formed by the outer and inner layers, the thickness of the intermediate layer of the container will be around 12% of the total thickness of the container wall, which, for a typical assumed thickness of 0.25 mm, allows the thickness of the intermediate layer to be cited as being under 0.05 mm.

In order for the thicknesses described for the normally protective layers (inner layer in the two-layer container and intermediate in the three-layer container) to provide sufficient specific shielding, it is necessary to use compositions that have a highly efficient light protecting effect, the chosen composition being, in our case, the cited combination of Al with light absorbents. Furthermore, for the purpose of compatibility between the layers, it is advisable to minimize the contents of total fillers and, moreover, approximate the filler contents present in both layers.

The differentiating characteristics of the invention are the result of effectively combining a very high light shielding capacity at any wavelength between 200 nm and 700 nm wavelength (UV-VIS) with the possibility of personalizing the containers offered by the multi-layers due to the possibility of using compositions of different materials in some of the layers so that practically total light shielding can be attained (% of transmittance of 0.01% or less) with notably lower filler levels than those conventionally used to date.

### Advantages of the invention

This opaque multi-layer container that is presented affords numerous advantages over those currently available, the most important being the possibility of achieving practically total protection at any wavelength with much lower filler levels than those conventionally used to date, as a result of effectively combining, in the mix of the shielding filler with the plastic matrix, a very high radiation shielding capacity in the whole of the light spectrum, even for very thin wall thicknesses (less than 0.1 mm) in the layers that make up the container.

Having described the advantages of reducing the % of fillers that the containers contain, and bearing in mind the maximum limits established for the fillers present in the different layers of the container described, we can cite the maximum total amount of fillers in the invention to be around 3.5% maximum, compared to values of between 5% and 6% in conventional alternative multi-layer containers.

An important advantage is the simplicity of the mixture presented, given the low amount of filler (AI) needed to complete protection, which leads to greater simplicity in the incorporation of the shield in the containers and a lower cost of the industrial solutions.

Another advantage of the invention is that, in equal conditions of coverage, the containers are considerably lighter than the conventional solutions to date, due to the low level of filler required, since the fillers are systematically denser than conventional plastic matrixes and the weights of the known opaque light-protecting containers always weigh more than their counterparts without fillers.

Another important advantage is the accessibility and availability of the shielding filler, as these are products that are very commonly used in numerous industrial sectors.

Finally, the advantages that are provided in terms of sustainability are evident, due to: less weight, less amount of fillers, less wastage and less wear and tear on production machinery.

### Description of figures

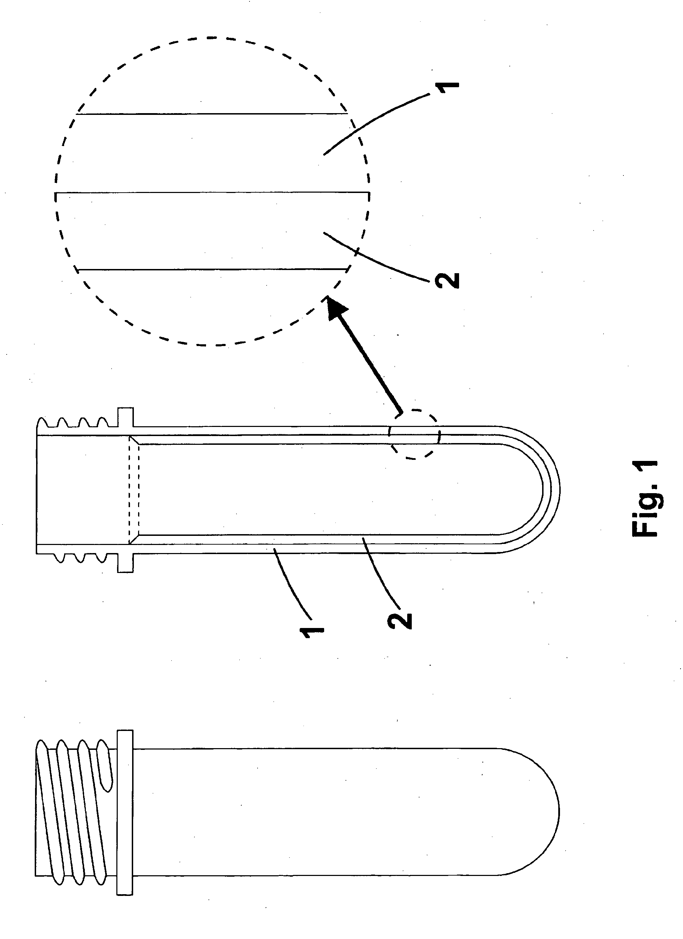

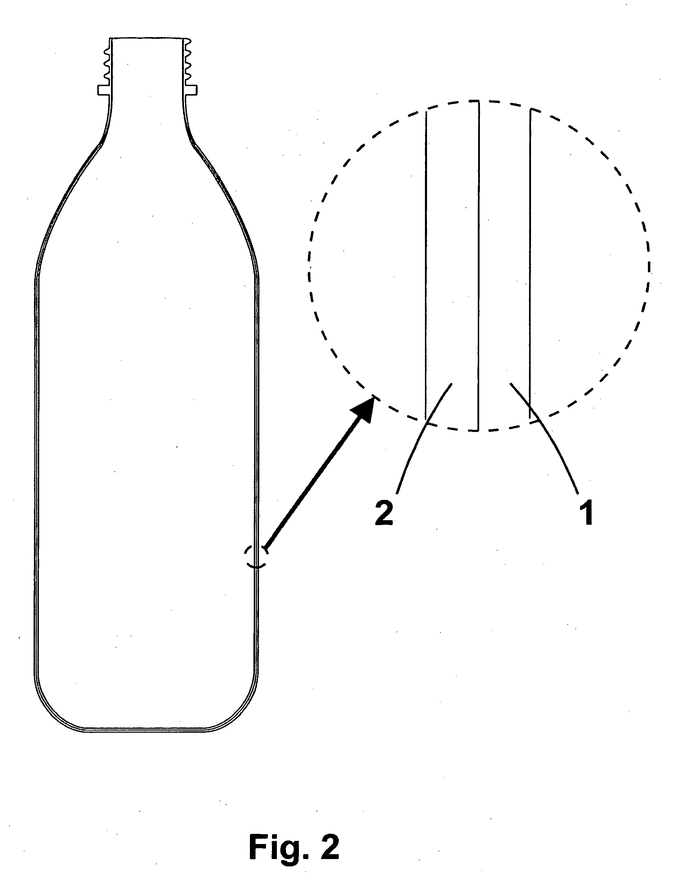

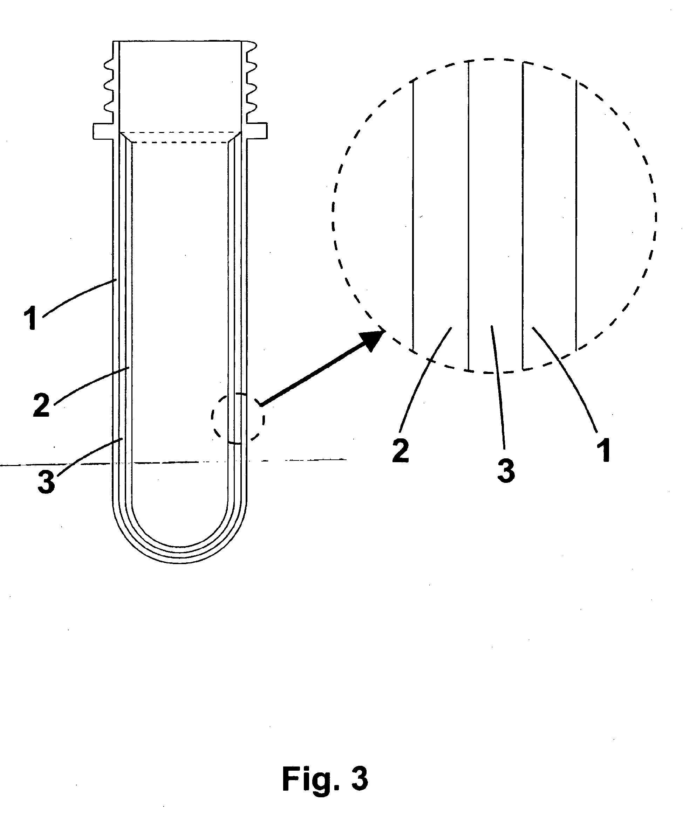

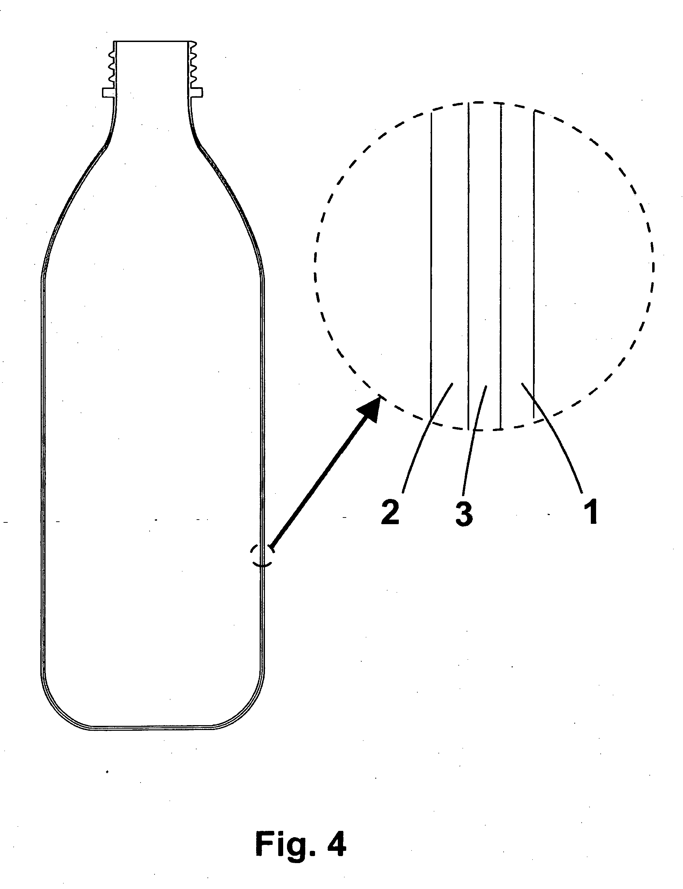

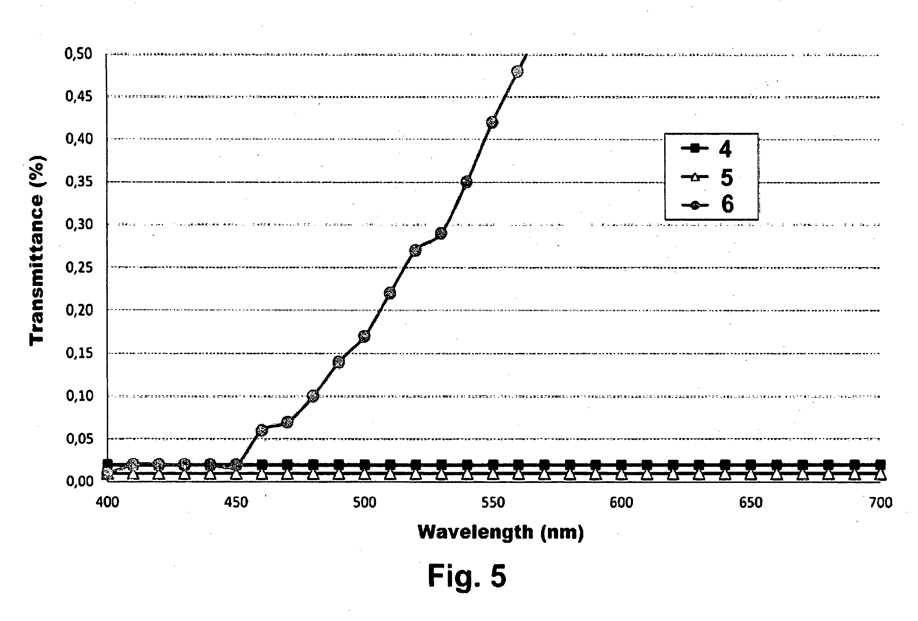

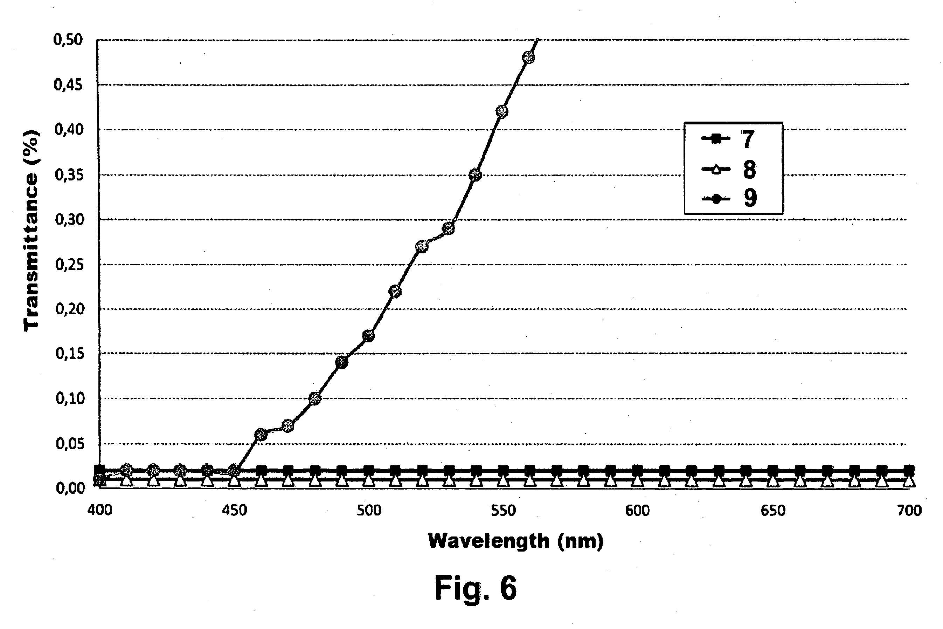

To provide a better understanding of the object of the present invention a preferred practical embodiment of an opaque multi-layer container is shown in the attached drawing. In said drawing, figure -1- shows a two-layer preform in which one layer (1) forms the mouth and external body of the preform, which, once it has been stretched and moulded by blowing, will be the outer, visible part of the container, while the other layer (2) forms the inside of the preform, and of the container once it has been blown, from the bottom to the start of the mouth.
Figure -2 - shows a diagram of a two-layer container, obtained by blowing a preform such as that shown in the previous figure.
Figure -3- shows a three-layer preform in which the outer layer (1) and inner layer (2) necessarily have the same composition and, in turn, the same as the mouth, while the intermediate layer (3) can be made, as is usual, of a different composition which contributes the greatest part of the shielding function.
Figure -4- shows a diagram of a three-layer container, obtained by blowing a preform such as that shown in the previous figure.
Figure -5- shows a graph that portrays the % of light transmitted ((%) transmittance) at all wavelengths in the visible spectrum (400 nm to 700 nm), for the inner layer of a two-layer 0.8 mm thick container at two different values of the product (P) = (%Al) x (% light absorbent) and for a single-layer container commercially used to contain UHT milk, with a wall thickness of 0.24 mm. The references used are:
   (4) P=0.04 (1%Al x 0.04%Abs) 1.04% Filler
   (5) P=0.1 (1.5%Al x 0.067%Abs) 1.567% Filler
   (6) Single-layer 9% Filler
Figure -6- shows a graph that portrays, on the same coordinate axes as in the previous case (% transmittance versus wavelength), transmittance through the intermediate layer of a three-layer container with a wall thickness of 0.04 mm at two different values of the product (P), and for the same single-layer container as in the previous case. The references used are:
   (7) P=0.12 (2%Al x 0.06%Abs) 2.06% Filler
   (8) P=0.15 (1.5%Al x 0.1 %Abs) 1.6% Filler
   (9) Single-layer 9% Filler

### Preferred embodiment of the invention

The opaque multi-layer container that is the object of the present invention is produced by blowing a preform or by injection-blowing and it basically comprises at least two layers of thermoplastic material with opacifying materials dispersed in the layers of thermoplastic material. The thermoplastic material is polyethylene terephthalate (PET) in all of the layers and the opacifying material, in at least one of the layers, comprises aluminium metal (Al) and a light absorbent, dispersed in the thermoplastic matrix.

The light absorbing material is preferably chosen from among lamp blacks, active carbons or iron oxides.

Aluminium metal Al is present in a proportion of between 0.5% and 2.0%, by weight of Al in relation to the total weight of each layer that contains Al.

The light-absorbing agent (Abs.) is present in such a proportion that the value of the product P obtained from multiplying the % by weight of Al (%Al) by the % by weight of the absorbing agent (%Abs.), present in each one of the layers that contain them (P=%Al x % Abs), is between 0.04 and 0.15 (0.04< P < 0.15).

The proportion of Al and absorbing material is such that the sum of the weights of the Al and the light absorbing material is present in an amount of less than 2.075%, by weight, of (Al + absorbent) in relation to the total weight of each of the layers that contain them.

The composition of opacifying materials may be different in each one of the layers.

In a preferred embodiment, the container is formed by two layers (1,2), including Al and light-absorbing material in both layers, in the inner layer (2) or in the outer layer (1).

If the two layers that form the container include Al and light-absorbing material, the absolute value of the % of absorbent is greater in the inner layer (2) than in the outer layer (1).

Optionally, in the preferred embodiment formed by two layers (1,2) it is foreseen that the outer layer (1) additionally includes titanium dioxide (TiO₂), between 1% and 4%, by weight of TiO₂ in relation to the total weight of the outer layer (1).

Also foreseen is an alternative embodiment of the invention in which the container is formed by three layers (1,2,3) of PET with opacifying materials, so that the composition of the opacifying materials is identical in the inner layer (2) and outer layer (1) and the composition of the opacifying materials in the intermediate layer (3) is different to the other two. In this case the Al and the light absorbing material can be included in all of the layers (1,2,3), only in the intermediate layer (3) or only in the inner layer (2) and the outer layer (1).

In the case of the alternative embodiment formed by three layers of PET with opacifying materials in which the Al and the light absorbing material are in all of the layers, the absolute value of the % of absorbent is greater in the intermediate layer (3) than in the other two (1,2).

In the case of the alternative embodiment formed by three layers of PET with opacifying materials in which the Al and the light absorbing material is only on the intermediate layer (3), it is foreseen that the inner layer (2) and outer layer (1) include TiO₂ between 1% and 4%, by weight of TiO₂ in relation to the total weight of the outer layer (1) and inner layer (2).

The parameters of the characteristics of the container have been set based on the consideration that the container will be characterized by the concentration of Al present in the protective layer/s and by the P factor.

In a preferred embodiment Al must be present in a greater amount than the absorbing agent (Abs) to establish the differentiality of its application, so that it is necessary to set a bottom limit for it, which has been established at 0.5%. For the top limit, experimental criteria establish 2% as a reasonable threshold.

The P factor can be defined according to the following criteria, ensuring a near to total screen with much lower wall thicknesses than in the case of single-layer containers. Considering that P=0.4 is the minimum value to achieve notable shields with low wall thicknesses and that for a P value of around 0.1 the shield will be total in some combination of Al (between 0.5 and 2%) and Abs. we can thus establish 0.04 < P < 0.15.

This parametrization enables us to obtain examples of different combinations in the ranges defined for % Al and P, with an estimation of the shield rendered in different multi-layer combinations.
2% Al + 0.075% Abs.: total shield applied in any layer of two-layer.
2% Al + 0.020% Abs.: total shield applied in the outer layers of three-layer
1% Al + 0.150% Abs.: total shield applied in any layer of two-layer
1 % Al + 0.040% Abs.: total shield applied in the outer layer of two-layer or of three-layer
0.5% Al + 0.30% Abs.: total shield applied in any layer of two-layer or three-layer
0.5% Al + 0.08% Abs.: total shield applied in the outer layers of three-layer

In the two-layer preforms, as we have seen in figure -1 -, normally the outer layer (1), which includes the mouth, accounts for approximately 75% of the total weight and approximately 70% of the thickness of the body wall. The inner layer (2) is normally, but not necessarily, where the shielding material is included. The thickness of the wall of this layer accounts for approximately 30% of the thickness of the total wall and its weight accounts for approximately 25% of the total weight of the preform.

As an example, for a typical preform intended for blowing a 1 litre capacity container, with a total weight of 28 g, the total thickness of the wall is between 3 mm and 3.5 mm, leaving a thickness, for the inner layer, of approximately 1 mm and a weight of around 7 g. The outer layer plus the mouth will contain around 21 g and will have a thickness in the body of around 2 to 2.5 mm.

In two-layer containers, as can be seen in figure -2-, obtained by blowing two-layer preforms, given that in the process of blowing the preform the inner layer and outer layer of the preform are stretched in a united way, the ratio of final thicknesses between the outer layer (1) and inner layer (2) of the container will bear the same ratio of thicknesses as in the initial preform (approximately, 70% for the outer layer and 30% for the inner layer). Given that stretching ratios of around 12 (container size /preform size) are normal, thicknesses of between 0.1 mm and 0.08 mm (0.1 **/** 12 = 0.08 mm) will be normal for the inner layer of the container, whilst for the outer layer, thicknesses of between 0.16 and 0.21 mm will be normal.

In three-layer preforms, as we have seen in figure -3-, the outer layer (1) and inner layer (2) necessarily have the same composition and, at the same time the same as that of the mouth, whilst the inner layer (3) may be formed, as frequently is the case, by a different composition which provides the greatest part of the shielding function. In this case the thickness of the inner layer (3) is usually around 15% of the total thickness of the wall. For a typical preform with a wall thickness of around 3.5 mm, the thickness of the inner wall of the preform will be approximately 0.5 mm.

In three-layer containers, as can be seen in figure -4-, obtained by blowing three-layer preforms, the relative thickness of the layers in the blown container will maintain the same ratio as in the initial preform, so that the thicknesses of the intermediate layer (3) of the container may typically be between 0.04 and 0.05 mm thick.

As can be seen in the graphs of figures -5- and -6-, the shields provided by the invention presented are much greater (much lower % transmittance of light) than those of the single-layer container in spite of the notable difference in the thicknesses of the walls (much lesser in the case of the invention). For P= 0.04 the % transmittance is already sufficiently low to guarantee sufficient shielding and for P=0.10, the shield can be considered to be practically absolute (% transmittance of light very close to 0.00% at any wavelength).

Another aspect to be taken into account is that the level of practically absolute shielding has been achieved with a much lower % of fillers than was usual to date (1.04% and 1.567% of total fillers in the case of the invention compared to 9% in the case of the single-layer).

It can be observed that even for a very thin wall thickness of 0.04 mm practically absolute shielding can be achieved with much lower filler levels than is usual (2.06% and 1.6% for the three-layer compared to 9% for the single-layer), so that when the wall thickness is lowered an increase in the product P of up to 0.12 and 0.15 allows shielding that is close to absolute and practically absolute, respectively.

## Claims

1. Opaque multi-layer container of the type produced by blowing a preform or by injection-blowing, which comprises at least two layers of thermoplastic material with opacifying materials dispersed in the layers of thermoplastic material, wherein the thermoplastic material is polyethylene terephthalate (PET) in all of the layers which form the container, and **characterized in that** at least one of the layers of opacifying material includes aluminium metal Al in a proportion of between 0.5% and 2.0% by weight of Al in relation to the total weight of each layer that contains the Al , and a light absorbing agent (Abs.), so that the value of the product (P) obtained by multiplying the % by weight of Al (%Al) by the % by weight of the absorbing agent (%Abs.) present in each of the layers that contain them (P=%Al x % Abs.), is between 0.04 and 0.15 (0.04 < P < 0.15).

2. Opaque multi-layer container, according the preceding claim, **characterized in that** it is formed by two layers (1,2) of PET with opacifying materials, so that the composition of the opacifying materials is different in each one of the layers (1,2).

3. Opaque multi-layer container, according to the preceding claims, **characterized in that** the two layers (1,2) that form the container include Al and light absorbing material.

4. Opaque multi-layer container, according to claims 1, and 2, **characterized in that** only the inner layer (2) includes Al and light absorbing material.

5. Opaque multi-layer container, according to claims 1, and 2, **characterized in that** only the outer layer (1) includes Al and light absorbing material.

6. Opaque multi-layer container, according to claims 1, 2, and 3, **characterized in that** the absolute value of the % light absorbent is greater in the inner layer (2) than in the outer layer (1).

7. Opaque multi-layer container, according to claims 1, 2, and 4, **characterized in that** the outer layer (1) includes titanium dioxide (TiO₂), between 1 % and 4%, by weight of TiO in relation to the total weight of the outer layer (1).

8. Opaque multi-layer container, according to claim 1, **characterized in that** it is formed by three layers (1,2,3) of PET with opacifying materials, so that the composition of opacifying materials is identical in the inner layer (2) and outer layer (1), and the composition of opacifying materials in the intermediate layer (3) is different from the other two.

9. Opaque multi-layer container, according to claims 1 and 8, **characterized in that** all of the layers (1,2,3) include Al and light absorbing material.

10. Opaque multi-layer container, according to claims 1 and 8, **characterized in that** only the intermediate layer (3) includes Al and light absorbing material.

11. Opaque multi-layer container, according to claims 1 and 8, **characterized in that** only the inner layer (2) and outer layer (1) include Al and light absorbing material.

12. Opaque multi-layer container, according to claims 1, 8 and 9, **characterized in that** the absolute value of the % of light absorbent is greater in the intermediate layer (3) than in the other two (1,2).

13. Opaque multi-layer container, according to claims 1, 8 and 10, **characterized in that** the inner layer (2) and outer layer (1) include titanium dioxide (TiO₂), between 1 % and 4%, by weight of TiO₂ in relation to the total weight of the outer layer (1) and inner layer (2).

14. Opaque multi-layer container, according to any of the previous claims, **characterized in that** the light absorbing material is chosen from among lamp blacks, active carbons or iron oxides.

## Patentansprüche

1. Undurchsichtiger, mehrschichtiger Behälter der Art, die durch Blasen einer Vorform oder durch Spritzblasen erzeugt wird, welcher wenigstens zwei Schichten aus thermoplastischem Material mit Trübungsmaterial aufweist, welche in den Schichten aus thermoplastischem Material verteilt sind, wobei das thermoplastische Material in sämtlichen Schichten, die den Behälter bilden, Polyethylen Terephthalat (PET) ist,
**dadurch gekennzeichnet, dass** wenigstens eine der Schichten mit Trübungsmaterial das Metall Aluminium Al in einem Verhältnis zwischen 0,5 Gew.% und 2,0 Gew.% von Al in Bezug auf das Gesamtgewicht jeder Schicht, welche Al enthält, und ein Licht absorbierendes Mittel (Abs.) enthält, so dass der Wert des Produkts (P), welcher erzielt wird, wenn die Gew.-% von Al (%Al) mit den Gew.-% des absorbierenden Mittels (%Abs.), das in jeder Schicht vorhanden ist, welche sie enthält, multipliziert werden (P=%Al x % Abs.), zwischen 0,04 und 0,15 (0,04 < P < 0,15) liegt.

2. Undurchsichtiger, mehrschichtiger Behälter nach dem vorhergehenden Anspruch, **dadurch gekennzeichnet, dass** er von zwei Schichten (1, 2) aus PET mit Trübungsmaterial derartig gebildet ist, dass die Zusammensetzung des Trübungsmaterials in jeder der Schichten (1, 2) verschieden ist.

3. Undurchsichtiger, mehrschichtiger Behälter nach den vorhergehenden Ansprüchen, **dadurch gekennzeichnet, dass** die beiden Schichten (1, 2), welche den Behälter bilden, Al und einen Licht absorbierenden Stoff enthalten.

4. Undurchsichtiger, mehrschichtiger Behälter nach Ansprüchen 1 und 2, **dadurch gekennzeichnet, dass** nur die innere Schicht (2) Al und einen Licht absorbierenden Stoff enthält.

5. Undurchsichtiger, mehrschichtiger Behälter nach Ansprüchen 1 und 2, **dadurch gekennzeichnet, dass** nur die äußere Schicht (1) Al und einen Licht absorbierenden Stoff enthält.

6. Undurchsichtiger, mehrschichtiger Behälter nach Ansprüchen 1, 2 oder 3, **dadurch gekennzeichnet, dass** der absolute Wert in % der Lichtabsorbtion in der inneren Schicht (2) größer ist als in der äußeren Schicht (1).

7. Undurchsichtiger, mehrschichtiger Behälter nach Ansprüchen 1, 2 oder 4, **dadurch gekennzeichnet, dass** die äußere Schicht (1) Titandioxid (TiO₂) enthält und zwar zwischen 1 und 4 Gew.% TiO₂ in Bezug auf das Gesamtgewicht der äußeren Schicht (1).

8. Undurchsichtiger, mehrschichtiger Behälter nach Anspruch 1, **dadurch gekennzeichnet, dass** er von drei Schichten (1, 2, 3) aus PET mit Trübungsmaterial derartig gebildet ist, dass die Zusammensetzung des Trübungsmaterials in der inneren Schicht (2) und der äußeren Schicht (1) identisch ist, und die Zusammensetzung des Trübungsmaterials in der Zwischenschicht (3) von den anderen beiden verschieden ist.

9. Undurchsichtiger, mehrschichtiger Behälter nach Ansprüchen 1 oder 8, **dadurch gekennzeichnet, dass** sämtliche Schichten (1, 2, 3) Al und einen Licht absorbierenden Stoff enthalten.

10. Undurchsichtiger, mehrschichtiger Behälter nach Ansprüchen 1 oder 8, **dadurch gekennzeichnet, dass** nur die Zwischenschicht (3) Al und einen Licht absorbierenden Stoff enthält.

11. Undurchsichtiger, mehrschichtiger Behälter nach Ansprüchen 1 oder 8, **dadurch gekennzeichnet, dass** nur die innere Schicht (2) und die äußere Schicht (1) Al und einen Licht absorbierenden Stoff enthalten.

12. Undurchsichtiger, mehrschichtiger Behälter nach Ansprüchen 1, 8 oder 9, **dadurch gekennzeichnet, dass** der absolute Wert in % der Lichtabsorbtion in der Zwischenschicht (3) größer ist als in den anderen beiden (1,2).

13. Undurchsichtiger, mehrschichtiger Behälter nach Ansprüchen 1, 8 oder 10, **dadurch gekennzeichnet, dass** die äußere Schicht (1) Titandioxid (TiO₂) enthält und zwar zwischen 1 und 4 Gew.% TiO₂ in Bezug auf das Gesamtgewicht der äußeren Schicht (1) und der inneren Schicht (2).

14. Undurchsichtiger, mehrschichtiger Behälter nach einem der vorhergehenden Ansprüche, **dadurch gekennzeichnet, dass** der Licht absorbierende Stoff aus Lampenruß, Aktivkohle oder Eisenoxiden ausgewählt ist.

## Revendications

1. Récipient multicouche opaque du type de ceux produits par soufflage d'une préforme ou par injection-soufflage, comprenant au moins deux couches de matériau thermoplastique avec des matériaux opacifiants dispersés dans les couches de matériau thermoplastique, dans lequel le matériau thermoplastique est du polyéthylène téréphtalate (PET) dans toutes les couches qui forment le récipient et, **caractérisé en ce qu'**au moins une couche du matériau opacifiant comprend de l'aluminium métallique A1 dans une proportion comprise entre 0,5% et 2,0% du poids d'A1 par rapport au poids total de chaque couche qui contient l'A1, et un agent absorbant la lumière (Abs.), de sorte que la valeur du produit (P) obtenue en multipliant le % du poids d'A1 (% Al) par le % du poids de l'agent absorbant (% Abs.) présents dans chacune des couches qui les contiennent (P = % A1 x % Abs.) se situe entre 0,04 et 0,15 (0,04 < P < 0,15).

2. Récipient multicouche opaque selon la Revendication précédente **caractérisé en ce qu'**il est formé de deux couches (1, 2) de PET contenant des matériaux opacifiants, de sorte que la composition des matériaux opacifiants est différente dans chacune des deux couches (1, 2).

3. Récipient multicouche opaque selon les Revendications précédentes **caractérisé en ce que** les deux couches (1, 2) qui forment le récipient contiennent de l'A1 et du matériau absorbant la lumière.

4. Récipient multicouche opaque selon les Revendications 1 et 2 **caractérisé en ce que** seule la couche intérieure (2) contient de l'A1 et du matériau absorbant la lumière.

5. Récipient multicouche opaque selon les Revendications 1 et 2 **caractérisé en ce que** seule la couche extérieure (1) contient de l'A1 et du matériau absorbant la lumière.

6. Récipient multicouche opaque selon les Revendications 1, 2 et 3 **caractérisé en ce que** la valeur absolue du % de matériau absorbant la lumière est plus élevée dans la couche intérieure (2) que dans la couche extérieure (1).

7. Récipient multicouche opaque selon les Revendications 1, 2 et 4 **caractérisé en ce que** la couche extérieure (1) contient du dioxyde de titane (TiO₂), entre 1 % et 4 % de poids de TiO₂ par rapport au poids total de la couche extérieure (1).

8. Récipient multicouche opaque selon la Revendications 1 **caractérisé en ce qu'**il est formé par trois couches (1, 2, 3) de PET avec des matériaux opacifiants de sorte que la composition des matériaux opacifiants est identique dans la couche intérieure (2) et la couche extérieure (1), et la composition des matériaux opacifiants est différente dans la couche intermédiaire (3) de celle des deux autres couches.

9. Récipient multicouche opaque selon les Revendications 1 et 8 **caractérisé en ce que** toutes les couches (1, 2, 3) contiennent de l'A1 et du matériau absorbant la lumière.

10. Récipient multicouche opaque selon les Revendications 1 et 8 **caractérisé en ce que** seule la couche intermédiaire (3) contient de l'A1 et du matériau absorbant la lumière.

11. Récipient multicouche opaque selon les Revendications 1 et 8 **caractérisé en ce que** seules les couches intérieure (2) et extérieure (1) contiennent de l'Al et du matériau absorbant la lumière.

12. Récipient multicouche opaque selon les Revendications 1, 8 et 9 **caractérisé en ce que** la valeur absolue du % de matériau absorbant la lumière est plus élevée dans la couche intermédiaire (3) que dans les deux autres couches (1, 2).

13. Récipient multicouche opaque selon les Revendications 1, 8 et 10 **caractérisé en ce que** la couche intérieure (2) et la couche extérieure (1) contient du dioxyde de titane (TiO₂), entre 1 % et 4 % de poids de TiO₂ par rapport au poids total de la couche extérieure (1) et de la couche intérieure (2).

14. Récipient multicouche opaque selon l'une quelconque des Revendications précédentes **caractérisé en ce que** le matériau absorbant la lumière est sélectionné parmi le noir de fumée, les charbons actifs ou les oxydes de fer.
